**Europäisches Patentamt**

**European Patent Office**

**Office européen des brevets**

(11) Veröffentlichungsnummer: **0 097 269**
**B1**

(12) # EUROPÄISCHE PATENTSCHRIFT

(45) Veröffentlichungstag der Patentschrift:
14.10.87

(51) Int. Cl.⁴: **B 65 D 90/00**

(21) Anmeldenummer: **83105464.8**

(22) Anmeldetag: **01.06.83**

(54) Eckbeschlag für Frachtcontainer.

(30) Priorität: **18.06.82 DE 3222763**
**26.10.82 DE 3239620**

(43) Veröffentlichungstag der Anmeldung:
**04.01.84 Patentblatt 84/1**

(45) Bekanntmachung des Hinweises auf die Patenterteilung:
**14.10.87 Patentblatt 87/42**

(84) Benannte Vertragsstaaten:
**BE FR GB IT NL SE**

(56) Entgegenhaltungen:
**EP-A-0 054 881**
**DE-A-1 952 581**
**DE-A-2 159 856**

(73) Patentinhaber: **Westerwälder Eisenwerk Gerhard GmbH, Ringstrasse Postfach 20, D-5241 Weitefeld/Sieg (DE)**

(72) Erfinder: **Gerhard, Helmut, Im Schlosssteinchen 31, D-5241 Weitefeld/Sieg (DE)**

(74) Vertreter: **Strehl, Peter, Dipl.- Ing., Strehl, Schübel- Hopf, Schulz Patentanwälte Widenmayerstrasse 17 Postfach 22 03 45, D-8000 München 22 (DE)**

EP 0 097 269 B1

LIBER, STOCKHOLM 1987

**Beschreibung**

Die Erfindung betrifft einen Eckbeschlag für Frachtcontainer.

In der EP-A-54 881, die zum Stand der Technik gemäß Art. 54 (3) EPÜ gehört, ist ein Eckbeschlag fur Frachtcontainer mit drei eine Würfelecke definierenden Wänden beschrieben, wobei in dem vom Frachtcontainer abgewandten Eckbereich dieser Würfelecke eine Ecköffnung und an einer Kante ein den beiden angrenzenden Wänden gemeinsames Kantenloch vorgesehen ist. Dabei ist auch erläutert, wie aus einem kreisförmigen oder quadratischen Zuschnitt mit einer mittleren kreisförmigen oder quadratischen Öffnung durch Kantungsvorgänge ein Eckbeschlag herstellbar ist, bei dem zwei Quadranten des Zuschnitts unter Bildung einer Fläche des Eckbeschlags einander überlappen. Bei einer Ausführungsform wird dort die Öffnung in dem dem Container abgewandten Eckbereich lediglich durch einen Schnitt gebildet, so daß sich an dieser Ecke ein nach außen ragender, gekanteter schnabelartiger Vorsprung ergibt, und unterhalb dieses Vorsprungs ist in der gleichen Kante ein Loch vorgesehen, durch das ein hinter dem Vorsprung eingeführter Kranhaken mit seiner Spitze austreten kann. Im übrigen sind in den Wänden des Eckbeschlages nach der früheren Patentanmeldung Löcher vorgesehen, die wie bei dem herkömmlichen Eckbeschlag nach der ISO-Norm 1161 zum Einführen spezieller Vorrichtungen für die seitliche Kopplung benachbart Container dienen.

Um die Handhabung von Containern mittels Gabelstaplern zu ermöglichen, ist es üblich an der Unterseite der Container zwischen den Eckbeschlagen Kanäle zum Einführen der Staplerarme vorzusehen. Derartige Kanäle verringern einerseits das Nutzvolumen, das innerhalb des von den Eckbeschlägen definierten Raumes zur Verfügung steht; andererseits erfordern sie zusätzliche Konstruktionselemente, die die Herstellung verteuern und das Gewicht des Containers erhöhen.

Der Erfindung liegt die Aufgabe zugrunde, einen Eckbeschlag für Frachtcontainer anzugeben, der bei noch einfacherer Gestaltung universell für alle acht Ecken eines Container verwendbar ist und dabei eine noch einfachere Kopplung zwischen benachbarten Containern in seitlicher und vertikaler Richtung bei gleichzeitig erhöhter Steifigkeit und Sicherheit sowie eine Handhabung des Containers mit Gabelstaplern ohne zusätzliche Konstruktionselemente gestattet. Dabei sollen die Vorzüge der früheren Containerecke, insbesondere die Möglichkeit, Krangehänge in den drei typischen Diagonalrichtungen einzuhängen, sowie die sichere Halterung eines in den Eckbeschlag eingeführten Kranhakens gegen unbeabsichtigtes Lösen bei schlaffem Seil, beibehalten werden.

Die erfindungsgemäße Lösung dieser Aufgabe ist im Patentanspruch 1 angegeben. Die danach in allen drei Kanten des Eckbeschlags vorgesehenen Kantenlöcher in Verbindung mit der allen drei Wänden der Würfelecke gemeinsamen Ecköffnung und der symmetrischen Gestaltung bezüglich der Raumdiagonale des Eckbeschlags gestatten es, den gleichen Eckbeschlag für sämtliche acht Ecken des Containers einzusetzen und dabei übereinandergestapelte sowie nebeneinander befindliche Container in einfacher Weise dadurch zu koppeln, daß in die einander zugewandten Ecköffnungen der neben- oder übereinander befindlichen Eckbeschläge Stiftpaare eingeführt werden, die dann sowohl im Bereich der Ecköffnungen als auch im Bereich der dann ebenfalls benachbarten Kantenlöcher verbunden werden. Da die Kantenbereiche der Eckbeschläge besonders formstabil sind, ergibt sich eine besonders sichere Kopplung. Der gleiche Vorteil hoher Stabilität wird beim Einhängen eines Kranhakens ausgenützt, der anders als bei früheren Lösungen nicht einen Flächenbereich sondern einen Kantenbereich des Eckbeschlages beansprucht.

Die Weiterbildung der Erfindung nach Anspruch 2 ist insofern von Vorteil, als der Eckbeschlag die Enden der Container-Rahmenelemente frei zugänglich läßt, so daß diese zum unmittelbaren Eingriff von Staplerarmen durch den Eckbeschlag hindurch benutzt werden können.

Im übrigen ist ein Frachtcontainer mit einer derartigen Eckbeschlag Gegenstand der Teilanmeldung EP-A-215 217.

In der Weiterbildung der Erfindung nach den Ansprüchen 3 bis 5 ergibt sich der Vorteil, daß die Container-Kantenelemente auch dann ohne Luft in den Eckbeschlag eingeführt und mit diesem verschweißt werden können, wenn sie scharfkantig sind. Gleichzeitig wird der Vorteil erreicht, daß eine zusätzliche Schweißung von der äußeren Kante her möglich ist, was insbesondere für eine sichere Verbindung des Eckbeschlags bei runden Container-Kantenelementen günstig ist.

Die Weiterbildungen der Erfindung nach den Ansprüchen 6 und 7 sind insbesondere bei verhältnismäßig kleinen Abmessungen des Eckbeschlags zu bevorzugen, um auch dort eine ausreichende Festigkeit der verbleibenden Lochlaibungen zu gewährleisten.

Bevorzugte Ausführungsbeispiele der Erfindung werden nachstehend anhand der Zeichnungen näher erläutert. In den Zeichnungen zeigen

Figur 1 einen Zuschnitt für einen Eckbeschlag für Frachtcontainer;

Figur 2 den aus dem Zuschnitt nach Figur 1 hergestellten Eckbeschlag;

Figur 3 eine Variante eines fertigen Eckbeschlags;

Figur 4 eine perspektivische Darstellung der eine Containerecke bildenden, mit einem Eckbeschlag verschweißten Profilelemente;

Figur 5 eine Seitenansicht der Anordnung nach Figur 4;

Figur 6 und 7 Varianten der in Figur 5 gezeigten Anordnung.

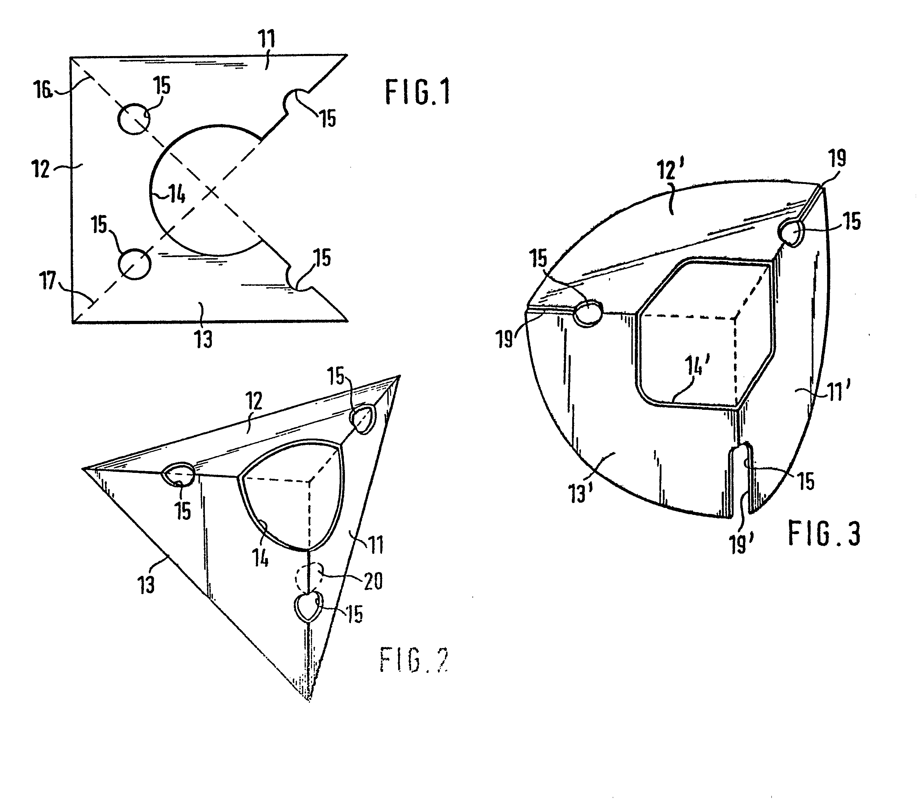

Der in Figur 1 gezeigte Zuschnitt für einen Eckbeschlag wird von drei Dreiecken 11, 12 und 13 in Form gleichschenkliger rechtwinkliger Dreiecke gebildet, die derart zusammenhängen, daß die Dreiecks-Hypotenusen drei Seiten eines Quadrates bilden. In diesem Zuschnitt ist eine im Schnittpunkt der Diagonalen zentrierte kreisförmige Öffnung 14 vorgesehen. Ferner ist zwischen der kreisförmigen Öffnung 14 und jeder Quadratecke ein kreisförmiges Loch 15 angeordnet, dessen Mittelpunkt auf der jeweiligen Diagonale liegt. Da der Zuschnitt insgesamt die Gestalt eines Quadrates mit einer fehlenden Viertelfläche aufweist, entspricht auch die mittlere Öffnung 14 nur einem Dreiviertel-Kreis, und zwei der Löcher 15 sind entsprechend nur halbkreisförmig vorhanden.

Wird der in Figur 1 gezeigte Zuschnitt um die Diagonalen 16 und 17 rechtwinklig gekantet, so ergibt sich die in Figur 2 gezeigte Form des Eckbeschlags, bei dem die beiden Katheten des an dem Zuschnitt fehlenden Dreiecks aneinanderstoßen und miteinander verschweißt sind.

Anstelle dieser Herstellungsweise aus einem gekanteten, ebenen Zuschnitt kann der in Figur 2 gezeigte Eckbeschlag auch im Stahlguß-, Tiefzieh- oder einem ähnlichen Verfahren hergestellt werden, wobei in diesem Fall die in Figur 2 gezeigte Ecköffnung 14 und die drei Kantenlöcher 15 hinterher vorgesehen werden.

Anstelle der in Figur 2 gezeigten Tetraederform kann der Eckbeschlag auch aus drei 90°-Kreissegmenten 11', 12', 13' aufgebaut sein, wie dies in Figur 3 dargestellt ist. Auch diese Gestalt kann von einem ebenen Zuschnitt durch Kantung und Schweißung oder im Stahlguß- oder in einem sonstigen Verfahren hergestellt sein.

Der Eckbeschlag nach Figur 3 weist an jeder Kante einen Schlitz 19 auf, der von der äußersten Ecke des Eckbeschlags längs jeder Kante bis zu dem Loch 15 verläuft. Werden die in den Figuren nicht gezeigten Container-Kantenelemente in den Eckbeschlag eingeführt, so ist durch die Schlitze 19 gewährleistet, daß sich beide Flächen dieser Kantenelemente "ohne Luft" bündig an die Innenflächen des Eckbeschlags anlegen und mit diesen verschweißt werden können, selbst wenn die Außenkanten dieser Kantenelemente relativ scharfkantig sind. Ohne diese Schlitze 19 wäre ein Anliegen an beiden Flächen wegen der bei gekanteten, gegossenen oder in sonstiger Weise gefertigen Beschlägen stets vorhandenen Innenradien nicht möglich. Ferner läßt sich durch den Schlitz 19 das in den Eckbeschlag eingeführte Kantenelement von der Außenkante her mit einer zusätzlichen Schweißnaht am Eckbeschlag befestigen, was insbesondere dann von Vorteil ist, wenn die Container-Kantenelemente einen runden oder außen abgerundeten Querschnitt aufweisen.

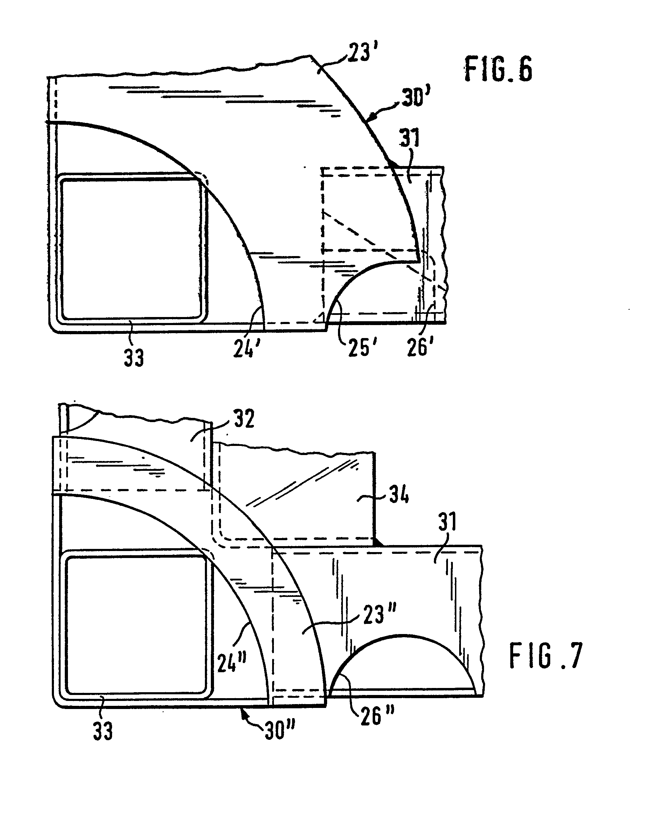

Die Schlitze 19 können auch bei dem Eckbeschlag nach Figur 2 vorgesehen sein. Ferner können die Schlitze, wie an der unteren vertikalen Kante als Beispiel bei 19' gezeigt, so breit sein, daß ihre Begrenzungslinien Tangenten an dem zugehörigen Kantenloch 15 bilden. Wie weiter unten in Zusammenhang mit Figur 6 noch erläutert, läßt sich in diesem Fall der Eckbeschlag mit einem Minimum an Material und Gewicht bauen.

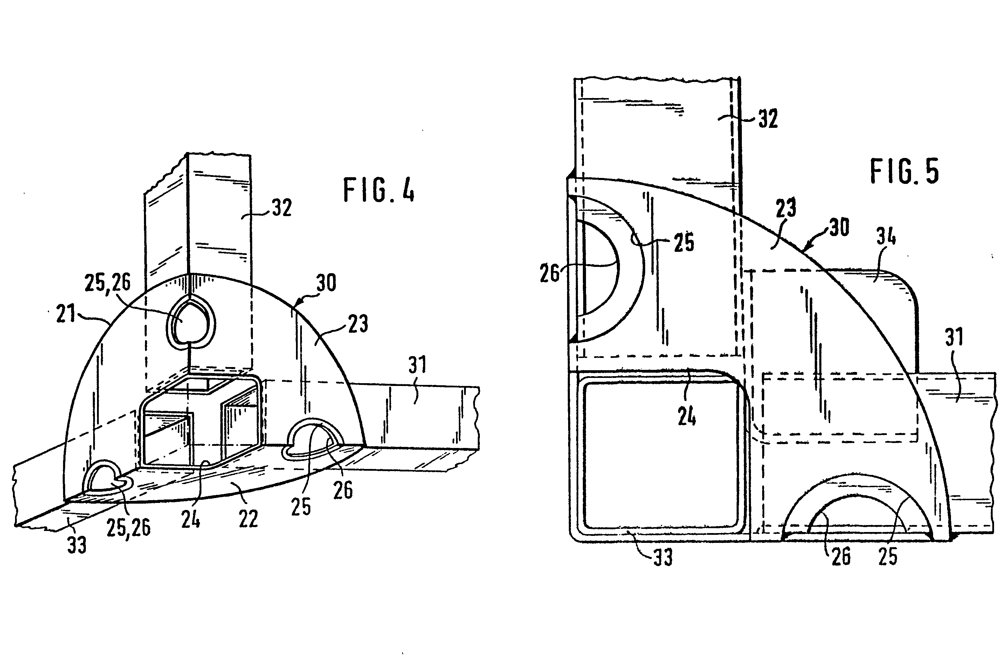

Gegenüber Figur 1 und 2 ist der Eckbeschlag nach Figur 3 ferner hinsichtlich der Gestaltung seiner Ecköffnung 14' modifiziert. Der Grund für diese Form, die von in den jeweiligen Wandelementen liegenden etwa quadratischen Aussparungen mit der äußersten Ecke des Eckbeschlags gegenüber vorgesehenen Abrundungen gebildet wird, erhellt aus der Beschreibung zu Figur 4.

Wird der Eckbeschlag nach Figur 2 oder 3 durch Kantung und Schweißung hergestellt, so läßt sich der Schlitz 19 bzw. 19' an der Kante, an der der Zuschnitt geschweißt wird, einfach dadurch erzeugen, daß diese Schweißung nur bis zu dem Kantenloch 15 ausgeführt wird. Die beiden übrigen Schlitze werden in diesem Fall ebenso wie die Kantenlöcher 15 bereits im ebenen Zustand eingestanzt.

Am fertigen Container dient die Ecköffnung 14 beispielsweise zum Einführen eines Kranhakens, dessen Spitze durch eines der Kantenlöcher 15 austritt. Bei einem üblichen Gehänge werden derartige Kranhaken in alle vier oberen Eckbeschläge eines Containers eingehängt, wobei die Spitzen der Kranhaken durch die in den senkrecht nach unten verlaufenden Kanten vorgesehenen Kantenlöcher 15 austreten. Von den Kranhaken verlaufen die Seile zu einem gemeinsamen Punkt etwa in der Mitte oberhalb des Containers. Bei abgesetztem Container lockern sich die Seile, wobei dann die Kranhaken sich weiter in die Ecköffnung 14 hineinzudrehen suchen, so daß sie sich nicht selbsttätig lösen können.

Da bei dieser Handhabungsweise der Kantensteg zwischen der Ecköffnung 14 und dem Kantenloch 15 besonders beansprucht ist, ist es zweckmäßig, ihn zu verstärken. Dieser Verstärkung kann durch die aus dem Kantenloch 15 ausgestanzte Lochbutze erfolgen. Statt einer vollständigen Ausstanzung kann die Lochbutze auch an der der Ecköffnung 14 zugewandten Seite verbunden bleiben und nach innen geklappt und dort verschweißt werden, wie dies in Figur 2 bei 20 angedeutet ist.

Die in den Figuren gezeigte 3/4-Kreisform der Ecköffnung 14 hat den Vorteil, daß sie einen etwas flacheren Angriffswinkel für den Kranhaken bietet und diesen in der Diagonale zentriert.

Während die Ausführung des Eckbeschlags nach Figur 2 als reiner Tetraeder den Vorteil hat, daß bei einem Minimum von Gewicht und Material maximale Kantenlängen erzielt werden, ist die Ausführungsform nach Figur 3, bei der der Eckbeschlag aus drei 90°-Kreissegmenten aufgebaut ist, in gewisser Weise deshalb von Vorteil, weil die Auflageflächen für die Containerkantenelementen etwas vergrößert sind.

Bei nebeneinander oder übereinander angeordneten Containern können die jeweils benachbarten Eckbeschläge in einfacher Weise mittels durch die Ecköffnungen 14 eingeführter Stiftpaare gekoppelt werden, die durch die benachbarten Kantenlöcher 15 hindurch miteinander verbunden werden. Da diese Kantenlöcher 15 gegenüber dem übrigen Profil der Container bzw. Eckbeschläge Rücksprünge bilden, bieten sie auch in Verbindung mit der Ecköffnung 14 oder auch ohne diese guten Eingriff beim Schnellzurren. Dadurch, daß durch die Ecköffnung 14 hindurch ein Bügel eingehängt wird, der bis hinter das betreffende Kantenloch 15 ragt, läßt sich ferner leicht eine schwerkraftgesicherte Zurrarretierung herstellen.

In Figur 4 und 5 sind die einen unteren linken Eckbereich eines Frachtcontainers bildenden Konstruktionselemente gezeigt, zu denen ein Eckbeschlag 30, drei Teile eines Containerrahmens bildende senkrecht zueinander verlaufende Profilelemente 31, 32, 33 und ein den Eckbeschlag verstärkendes Knotenstück 34 (nur in Fig. 5 gezeigt) gehören. Der Eckbeschlag besteht, wie oben erläutert, aus drei senkrecht zueinander verlaufenden Wandelementen 21, 22, 23, die gemeinsam eine Ecköffnung 24 bilden. Der Eckbeschlag 30 kann gemäß Figur 1 aus einem ebenen Zuschnitt durch Kanten und Verschweißen oder auch durch Pressen, Ziehen oder einen sonstigen Verformungsvorgang hergestellt sein. Bei dem Knotenstück 34 handelt es sich um dasjenige Materialstück, das beim Ausschneiden der Ecköffnung 24 aus dem Eckbeschlag 30 anfällt. An den drei Kanten weist der Eckbeschlag 30 ferner jeweils ein in beiden aneinanderstoßenden Wandelementen ausgeschnittenes Kantenloch 25 auf.

Die drei Profilelemente 31, 32, 33 sind in die Kantenbereiche des Eckbeschlags 30 so weit eingeschoben, daß sie kurz vor der Ecköffnung 24 enden. Sie weisen ihrerseits ebenfalls jeweils ein Kantenloch 26 auf, das mit dem entsprechenden Kantenloch 25 des Eckbeschlags 30 im wesentlichen fluchtet. In dieser Stellung sind die Profilelemente 31, 32, 33 mit dem Eckbeschlag 30 an den in Figur 5 angedeuteten Stellen verschweißt. Das Knotenstück 34 ist so eingesetzt, daß seine beiden vertikalen Seitenflächen teilweise an den vertikalen Innenflächen der Profilelemente 31 und 33 anliegen und dort ebenfalls verschweißt sind. Die Verbindung zwischen dem Knotenstück 34 und dem vertikalen Profilelement 32 kann bei Bedarf über ein (in den Zeichnungen nicht dargestelltes) zusätzliches Bauelement erfolgen. Sofern die einander benachbarten senkrecht verlaufenden Kanten des Knotenstücks 34 und des vertikalen Profilelements 32 nicht zu stark abgerundet sind, kann auch eine unmittelbare Verschweißung der beiden Teile an diesen Kanten vorgenommen werden.

Die Profilelemente 31, 32, 33 sind als Hohlprofilelemente mit im wesentlichen quadratischem Querschnitt gestaltet. Die Ecköffnung 24 des Eckbeschlags 30 wird von drei in den einzelnen Wandelementen 21, 22, 23 liegenden im wesentlichen quadratischen Ausschnitten gebildet, deren von der gemeinsamen Ecke abgewandte Ecke gerundet ist. Diese Quadratflächen sind etwas größer als der lichte Querschnitt der Profilelemente 31, 32, 33, so daß die Profilelemente als Staplerkanäle verwendet werden können und mit ihrem vollen Querschnitt durch die Ecköffnung 24 hindurch zugänglich sind. Die äußere Form der den Eckbeschlag 30 bildenden drei Wandelemente 21, 22 und 23 entspricht jeweils einem Kreisquadranten, wobei die Kreismittelpunkte in der (gedachten) Ecke des Eckbeschlags 30 zusammenfallen.

Ist ein Container an allen seinen acht Ecken gemäß der Darstellung in Figur 4 und 5 aufgebaut, so läßt er sich mittels eines Cabelstaplers in jeder beliebigen Lage und von jeder Seite her anheben, da die Staplerarme in jeder der drei Richtungen durch jeden Eckbeschlag hindurch in den von dem betreffenden Profilelement 31, 32, 33 gebildeten Staplerkanal eingeführt werden können. Wegen der aus Symmetriegründen quadratischen Staplerkanal-Querschnitte ist es günstig, wenn auch die Gablerarme bzw. Gabelzinken quadratischen Querschnitt haben. Dies ist gegenüber den üblichen flachen Zinkenquerschnitten wegen der erhöhten Biegesteifigkeit von Vorteil.

Zur Handhabung des Containers mittels Gabelstaplers können die Staplerarme in die beiden unteren oder die beiden oberen Eckbeschläge und die dahinter liegenden Profilelemente über eine entsprechend große Länge eingeführt werden. Stattdessen ist es auch möglich, zwei wesentlich kürzere Gabelarme oder Dorne in die beiden oberen Eckbeschläge und Profilelemente über eine verhältnismäßig kurze Länge einzuführen und durch Arretierungsstifte zu sichern, die durch die Kantenlöcher 25, 26 hindurch in entsprechende Ausnehmungen in den Staplerarmen eingeführt werden oder in entsprechendem Abstand von staplerseitigem Ende der Arme fest mit diesen verbunden sind. Weiterhin ist es auch möglich, vergleichsweise kurze Dornen in alle vier dem Gabelstapler zugewandten Eckbeschläge und die dahinter liegenden Profilelemente einzuführen, wobei auch in diesem Fall mit Seitenspreadern gearbeitet wird. Die Reibung der vier Dorne innerhalb der vier Profilelemente sorgt in diesem Fall für eine noch sicherere Halterung des Containers am Gabelstapler.

Schließlich können durch die unteren Eckbeschläge und miteinander fluchtenden Hohlprofilelemente von mehreren hintereinander stehenden Containern zwei parallele Koppelstangen hindurchgeführt werden. Eine derartig gekoppelte Einheit könnte ohne Plattform oder Chassis auf Achselemente gestellt werden. Die mit diesem Konzept erzielte Gewichtsersparnis ist offenkundig.

Anstelle der in Figur 4 und 5 gezeigten Profilelemente mit im wesentlichen quadratischem Hohlprofil können auch solche mit kreisförmigem Hohlprofil verwendet werden. In diesem Fall müssen auch die Arme oder Zinken des Gabelstaplers bzw. Seitenspreaders kreisförmigen Querschnitt haben, was für die Handhabung von Papierrollen oder dergleichen bekannt ist.

Ferner ist es auch möglich, als Profilelemente 31, 32, 33 solche mit L-Profil zu verwenden, die in üblicher Weise so angeordnet sind, daß ihre Kanten die Außenkanten des Containerrahmens bilden. In einem solchen Fall können nur die entsprechend der jeweiligen Lage des Containers oberen beiden Profilelemente als Staplerkanäle verwendet werden.

Zum Heben des Containers mittels Kranhaken wird dieser durch die Ecköffnung 24 hindurch derart eingeführt, daß seine Spitze durch diejenige Kantenöffnung 25, 26 austritt, die in Zugrichtung des Kranseiles liegt. Die in Figur 4 und 5 gezeigte abgerundete Form der im übrigen durch Quadratflächen gebildeten Ecköffnung 24 bewirkt dabei, daß sich der Kranhaken mit seinem dem Seilangriffspunkt benachbarten Abschnitt in die Rundung schmiegt und dadurch in derjenigen Stellung zentriert wird, in der er gegen ein Herausfallen bei schlaffem Seil gesichert ist.

Beim Verkoppeln neben- oder aufeinander liegender Container lassen sich Koppelelemente durch die Ecköffnungen 24 oder durch die Kantenöffnung 25, 26 der jeweils unmittelbar benachbarten Eckbeschläge 30 der beiden Container einführen, wobei diese Koppelelemente zusätzlich durch die jeweils anderen Löcher bzw. Öffnungen hindurch fixiert werden können.

Die Ausführungsform nach Figur 6 unterscheidet sich von der nach Figur 4 und 5 dadurch, daß die Ecköffnung 24' von drei Viertelkreisbögen gebildet ist, deren Radius im wesentlichen gleich der Diagonale des lichten Querschnitts der Profilelemente 31, 32, 33 ist. Die Wandelemente, von denen in Figur 6 insbesondere das Wandelement 23 zu sehen ist, sind dabei auf einen verhältnismäßig schmalen Ring reduziert, der nur bis zu einem Teil der in den Profilelementen 31, 32 vorgesehenen Kantenlöcher 26 verläuft. In diesen Kantenbereichen ist der Eckbeschlag nach Figur 6 mit Kantenausschnitten 25' versehen.

Während bei dem Eckbeschlag 30 nach Figur 4 und 5 die Kantenlöcher 25, 26 in den beiden aneinanderstoßenden Wandelementen jeweils halbkreisförmig ausgebildet sind (wobei das im Eckbeschlag vorgesehene Kantenloch 25 zur Aufnahme von Toleranzen in der gegenseitigen Ausrichtung etwas größer ist als das Kantenloch 26 in den Profilelementen), ist es auch möglich, das Kantenloch 26' in den Profilelementen durch einen rechteckigen oder schrägen Ausschnitt zu bilden, wie dies in Figur 6 durch gestrichelte Linien angedeutet ist. Ein gerader über die Kante des Profilelements verlaufender Ausschnitt ist dabei herstellungstechnisch besonders günstig.

In Figur 6 ist kein Knotenstück gezeigt. Ferner sind die Profilelemente nur über ein kurzes Stück in den Eckbeschlag 30' eingeführt. Diese Gestaltung der Containerecke kommt daher mit wenig Material aus und ist leicht, was für Kleincontainer brauchbar und günstig sein kann.

In der in Figur 7 gezeigten weiteren Variante sind die Wandelemente des Eckbeschlags 30'' auf eine noch geringere Materialbreite reduziert. In diesem Fall endet der Eckbeschlag außerhalb der in den Profilelementen 31, 32 vorgesehenen Kantenlöcher 26''. Zur Erhöhung der Steifigkeit ist dabei wieder ein Knotenstück 34 vorgesehen, das in diesem Fall so eingesetzt ist, daß seine dem Betrachter zugewandte senkrechte Fläche an dem Wandelement 23'' anliegt und mit diesem verschweißt ist, während die beiden übrigen Flächen des Knotenstücks 34 mit der oberen Fläche des Profilelements 31 bzw. der rechten inneren Fläche des Profilelements 32 verschweißt sind. In diesem Fall läßt sich eine Verbindung zwischen Knotenstück 34 und dem dritten Profilelement 33 wiederum über ein zusätzliches (nicht gezeigtes) Bauelement erreichen.

Die oben beschriebenen Gestaltungsmerkmale der drei in den Zeichnungen gezeigten Ausführungsbeispiele können je nach Bedarf variiert werden. So kann auch in der Ausführungsform nach Figur 6 ein Knotenstück verwendet werden. In jedem Fall kann das Knotenstück entsprechend Figur 5 und 7 gestaltet sein. Ferner kann der Eckbeschlag in sämtlichen Fällen anstelle der gezeigten Kreisquadranten aus dreieckigen oder auch quadratischen Wandelementen aufgebaut sein. In ähnlicher Weise kann die Ecköffnung 24 des Eckbeschlags in jedem Fall aus quadratischen Ausschnitten mit gerundeter Ecke gemäß Figur 4 oder 5 oder aus viertelkreisbogenförmigen Ausschnitten gemäß Figur 6 und 7 oder auch aus dreieckigen Ausschnitten gebildet sein.

**Patentansprüche**

1. Eckbeschlag für Frachtcontainer, umfassend drei eine Würfelecke definierende Wände (11, 12, 13; 21, 22, 23), wobei in dem vom Frachtcontainer abgewandten Eckbereich dieser Würfelecke eine allen drei Wänden (11, 12, 13; 21, 22, 23) gemeinsame Ecköffnung (14; 24) und an jeder der drei Kanten ein den beiden jeweils angrenzenden Wänden gemeinsames Kantenloch (15; 25) vorgesehen ist, und wobei die Ecköffnung (14; 24) und die drei Kantenlöcher (15; 25) im wesentlichen symmetrisch zu der durch die Ecköffnung (14; 24) verlaufenden Raumdiagonale der Würfelecke angeordnet sind.

2. Eckbeschlag nach Anspruch 1, bei dem die Ecköffnung (14; 24) derart gesteltet und bemessen ist, daß sie die lichte Öffnung von in die Kanten des Eckbeschlags eingeführten, einen Containerrahmen bildenden Profilelementen in deren Verlängerungen freiläßt.

3. Eckbeschlag nach Anspruch 1 oder 2, bei dem die drei Kanten der Würfelecke von den von der Ecköffnung (14) abgewandten Ecken her geschlitzt (19) sind.

4. Eckbeschlag nach Anspruch 3, bei dem die Schlitze (19) bis zu den Kantenlöchern (15) verlaufen.

5. Eckbeschlag nach Anspruch 3, bei dem jeder Schlitz (19') von zur betreffenden Kante des Eckbeschlags parallelen Tangenten des zugehörigen Kantenlochs (15) begrenzt ist.

6. Eckbeschlag nach einem der Ansprüche 1 bis 5, bei dem die zwischen der Ecköffnung (14) und den Kantenlöchern (15) bestehenden Kantenbereiche verstärkt sind.

7. Eckbeschlag nach Anspruch 6, bei dem die Verstärkung Kantenlöchern (15) mindestens teilweise ausgeschnittenen und gegebenenfalls nach innen geklappten Lochbutzen (20) gebildet sind.

## Claims

1. Corner fitting for freight containers comprising three walls (11, 12, 13; 21, 22, 23) defining the corner of a cube, a corner opening (14; 24) common to all three walls (11, 12, 13; 21, 22, 23) being provided in the corner region of the cube corner remote from the freight container, an edge hole (15; 25) common to the respective two adjoining walls being provided at each of the three edges, the corner opening (14; 24) and the three edge holes (15; 25) being disposed substantially symmetrically with respect to the space diagonal of the cube corner extending through the corner opening (14; 24).

2. The corner fitting of claim 1, wherein the corner opening (14; 24) is formed and dimensioned such that it leaves free the clear aperture of profile elements, which form a container frame and are inserted into the edges of the corner fitting, in the projections of these elements.

3. The corner fitting of claim 1 or 2, wherein the three edges of the cube corner are slotted (19) from the corners remote from the corner opening (14).

4. The corner fitting of claim 3, wherein the slots (19) extend to the edge holes (15).

5. The corner fitting of claim 3, wherein each slot (19') is confined by tangent lines of the associated edge hole (15) extending parallel to the respective edge of the corner fitting.

6. The corner fitting of any of claims 1 to 5, wherein the edge regions existing between the corner opening (14) and the edge holes (15) are reinforced.

7. The corner fitting of claim 6, wherein the reinforcements are formed by roundels (20) cut at least partly from the edge holes (15) and eventually folded inwardly.

## Revendications

1. Pièce de coin pour conteneurs, comprenant trois parois (11, 12, 13; 21, 22, 23) définissant un coin de cube, une ouverture de coin (14; 24) commune aux trois parois (11, 12, 13; 21, 22, 23) étant prévue dans la région de ce coin de cube opposée au conteneur et chacune des trois arêtes présentant un trou d'arête (15; 25) commun aux deux parois respectivement contiguës, l'ouverture de coin (14; 24) et les trois trous d'arête (15; 25) étant disposés essentiellement symétriquement par rapport à la diagonale dans l'espace du coin de cube qui passe par l'ouverture de coin (14; 24).

2. Pièce de coin selon la revendication 1, dans laquelle l'ouverture de coin (14; 24) est réalisée et dimensionnée de telle façon qu'elle laisse libre l'ouverture intérieure d'éléments profilés engagés dans les arêtes de la pièce de coin et formant un cadre de conteneur dans les prolongements de ces dernières.

3. Pièce de coin selon l'une des revendications 1 ou 2, dans laquelle les trois arêtes du coin de cube sont fendues (19) à partir des coins opposés à l'ouverture de coin (14).

4. Pièce de coin selon la revendication 3, dans laquelle les fentes (19) s'étendent jusqu'aux trous d'arête (15).

5. Pièce de coin selon la revendication 3, dans laquelle chaque fente (19') est limitée par des tangentes au trou d'arête associé (15) orientées parallèlement à l'arête correspondante de la pièce de coin.

6. Pièce de coin selon l'une quelconque des revendications 1 à 5, dans laquelle les régions d'arêtes entre l'ouverture de coin (14) et les trous d'arête (15) sont renforcées.

7. Pièce de coin selon la revendication 6, dans laquelle le renforcement des arêtes est réalisé par des pastilles (20) qui sont découpées, au moins partiellement des trous d'arête (15) et repliées, le cas échéant, vers l'intérieur.

FIG.1

11

16 15

12 15

17 14 15

13 15

12' 19

15

15 19

14' 11'

13' 15

19' FIG.3

15

12

15

11

14 20

13 15

FIG.2

0 097 269

FIG. 4

FIG. 5

0 097 269

FIG.6

FIG.7